# EUROPÄISCHE PATENTANMELDUNG

(11) **EP 2 856 913 A1**
(43) Veröffentlichungstag der Anmeldung: **08.04.2015**
(21) Anmeldenummer: 14187396.8
(22) Anmeldetag: 02.10.2014
(51) Int. Cl.: A47B 96/20, B32B 19/04

(54) **Plattenartiges Möbelteil**

(30) Priorität: 07.10.2013 DE 202013104516 U
(71) Anmelder: Kattwinkel, Frieder, 42653 Solingen (DE)
(72) Erfinder: Kattwinkel, Frieder, 42653 Solingen (DE)
(74) Vertreter: Müller, Enno

(57) **Zusammenfassung**

Die Erfindung betrifft ein plattenartiges Möbelteil mit zwei Oberseiten-Flächen (4, 5) und Stirnflächen (6), wobei zur Bildung einer ersten Oberseiten-Fläche (4) ein Stein- oder Keramik-Plattenteil (7), mit einer Dicke von 1 bis 10 mm, als erste Außenlage und zur Bildung einer zweiten Oberseiten-Fläche (5) ein Kunststoffoder Holz-Plattenteil (8), mit einer Dicke von 0,3 bis 10 mm, als zweite Außenlage vorgesehen sind, und wobei weiter zwischen den Außenlagen eine Verstärkungslage (9, 10) angeordnet ist, wobei darüber hinaus das Möbelteil eine senkrecht zu einer Flächenerstreckung eines Plattenteils (7, 8) gemessene Gesamtdicke von 10 bis 40 mm aufweist. Um bei rationeller Herstellbarkeit eine hohe Maßhaltigkeit erreichen zu können, schlägt die Erfindung vor, dass zwei Verstärkungslagen (9, 10) vorgesehen sind, dass die Verstärkungslagen (9, 10) als Festkörper vorzugsweise aus einem Mineralstoff oder Kunststoff ausgebildet sind, dass beide Plattenteile (7, 8) jeweils flächig innenseitig mit einer Verstärkungslage (9, 10) verhaftet sind und dass die Plattenteile (7, 8) mittels der Verstärkungslagen (9, 10) untereinander unter Ausbildung eines eine Klebespaltbreite aufweisenden Klebespaltes (11) durch Klebung verbunden sind, wobei die in Dickenrichtung des Möbelteils gemessene Klebespaltbreite 0,2 mm oder mehr bis hin zu beispielsweise 4 mm beträgt.

## Beschreibung

Die Erfindung betrifft zunächst ein plattenartiges Möbelteil mit zwei Oberseiten-Flächen und Stirnflächen, wobei zur Bildung einer ersten Oberseiten-Fläche ein Stein- oder Keramik-Plattenteil, mit einer Dicke von 1 bis 10 mm, als erste Außenlage und zur Bildung einer zweiten Oberseiten-Fläche ein Kunststoffoder Holz-Plattenteil, mit einer Dicke von 0,3 bis 10 mm, als zweite Außenlage vorgesehen sind, und wobei weiter zwischen den Außenlagen eine Verstärkungslage angeordnet ist, wobei darüber hinaus das Möbelteil eine senkrecht zu einer Flächenerstreckung eines Plattenteils gemessene Gesamtdicke von 10 bis 40 mm aufweist.

Die Erfindung betrifft darüber hinaus ein Verfahren zum Herstellen eines plattenartigen Möbelteils mit zwei Oberseitenflächen und Stirnflächen, wobei zur Bildung einer ersten Oberseitenfläche ein Stein- oder Keramik-Plattenteil, mit einer Dicke von 1 bis 10 mm, als erste Außenlage und zur Bildung einer zweiten Oberseiten-Fläche ein Kunststoff- oder Holz-Plattenteil, mit einer Dicke von 0,3 bis 10 mm, als zweite Außenlage vorgesehen werden, wobei weiter zwischen den Außenlagen eine Verstärkungslage angeordnet wird.

Ein derartiges plattenartiges Möbelteil ist beispielsweise aus der EP 2 317 027 A2 bekannt. Bei dem bekannten Möbelteil ist als Verstärkungslage eine Holzlage vorgesehen. Zudem ist die eine Verstärkungslage einerseits, unter Ausbildung eines Klebespaltes, unmittelbar mit dem Stein- oder Keramik-Plattenteil verbunden und anderseitig mit dem die zweite Außenlage bildenden Plattenteil verhaftet. Wenn auch die Holzlage vorteilhaft ist im Hinblick auf die Aufnahme von Funktionsteilen wie einer Schraube oder einem Teil eines Scharniers, in dieser Holzlage, hat sich doch gezeigt, dass unterschiedliches "Arbeiten" der Holzlage und der Stein- oder Keramiklage eintreten kann, so dass eine Maßhaltigkeit des Möbelteils beeinflusst sein kann.

Ausgehend von dem genannten Stand der Technik beschäftigt sich die Erfindung mit der Aufgabe, ein Möbelteil mit einem Stein- oder Keramik-Plattenteil als erste Außenfläche und einem Kunststoff- oder Holz-Plattenteil als zweite Außenfläche anzugeben, das bei rationeller Herstellbarkeit eine hohe Maßhaltigkeit erreichen lässt. Darüber hinaus stellt sich die Aufgabe, ein vorteilhaftes Verfahren zum Herstellen, eines plattenartigen Möbelteils anzugeben.

Nach einer ersten möglichen Lösung der Aufgabe ist darauf abgestellt, dass zwei Verstärkungslagen vorgesehen sind, dass die Verstärkungslagen als Festkörper vorzugsweise aus einem Mineralstoff oder Kunststoff ausgebildet sind, dass beide Plattenteile jeweils flächig innenseitig mit einer Verstärkungslage verhaftet sind und dass die Plattenteile mittels der Verstärkungslagen untereinander unter Ausbildung eines eine Klebespaltbreite aufweisenden Klebespaltes durch Klebung verbunden sind, wobei die in Dickenrichtung des Möbelteils gemessene Klebespaltbreite 0,2 mm oder mehr bis hin zu 4 mm beträgt.

Nach einer weiteren möglichen Lösung der Aufgabe ist verfahrensmäßig darauf abgestellt, dass jedes Plattenteil einseitig mit einer gesonderten Verstärkungslage verbunden wird und dass die mit den Verstärkungslagen verbundenen Plattenteile unter Zwischenlage der Verstärkungslagen und Ausbildung eines Klebespaltes miteinander verklebt werden, wobei der Klebespalt zum Ausgleich von Toleranzen bei Einstellung einer gleichen Gesamtdicke genutzt wird, wobei die Verstärkungslagen als handhabbarer Festkörper aus einem Mineralstoff oder Kunststoff ausgebildet sind.

Dadurch, dass (zunächst) jedes Plattenteil für sich mit einer Verstärkungslage verbunden ist, sind im Ausgangspunkt zwei starre Verbundteile gegeben. Diese beiden Verbundteile sind im Weiteren unter Ausbildung des genannten Klebespaltes miteinander klebeverbunden. Die relative Größe des Klebespaltes ermöglicht es, etwaige Maßungenauigkeiten, welche die einzelnen Verbundplatten für sich genommen aufweisen, im Hinblick auf Maßungenauigkeiten über die Länge des Plattenteils in Dickenrichtung, durch eine unterschiedlich große Ausbildung des Klebespaltes über die Länge und/oder eine Breite eines Plattenteiles auszugleichen.

Hierzu können die Verbundplattenteile mit dazwischen aufgebrachtem Klebstoff in eine vorgegebene Maßform eingegeben werden, bis der Klebstoff ausgehärtet ist, so dass sich die Außenmaße der Maßform letztlich an dem Möbelteil ergeben.

Dadurch, dass die Verstärkungslagen aus einem Mineralstoff oder Kunststoff bestehen, kann der Werkstoff auch so ausgewählt sein, was bevorzugt ist, dass eine übliche schreinermäßige Verarbeitung, auch eine Schraubbefestigbarkeit in einer oder beiden Verstärkungslagen, gegeben ist.

Ein solches Möbelteil kann insbesondere als Schranktüre ausgebildet sein. Hierzu ist es beispielsweise erforderlich, topfartige Ausnehmungen randseitig einzufräsen, um übliche Scharnierteile aufnehmen zu können. Da diese Ausfräsungen unter Belassung nur eines kleines Steges zur zugeordneten Rand-Stirn-fläche, von beispielsweise 2 bis 10 mm, anzuordnen sind, ist zugleich eine hohe Stabilität des Materials erforderlich, um Ausbrüche oder dergleichen zu verhindern.

Hinsichtlich Kunststoff kann ein Schaumstoff hohen Raumgewichts in Frage kommen. Beispielsweise eines Raumgewichts von 50 oder mehr kg/m³, beispielsweise auch hin bis zu 1.000 kg/m³. Hinsichtlich eines solchen Kunststoffoder Schaumstoffprodukts wird auch beispielsweise auf die EP 1853 654 B1 verwiesen. Hinsichtlich Mineralstoff ist der Einsatz von einer Platte auf Mineralschaumgranulat, Blähglas und/oder expandiertem Mineral möglich. Im Hinblick auf Blähglas, das grundsätzlich bevorzugt ist, können auch Kunststoffanteile enthalten sein, die zur Verbindung von Blähglasanteilen untereinander dienen.

Der genannte Klebespalt ist weiter bevorzugt nicht vollständig ausgefüllt. Die Verklebung kann weiter bevorzugt über eine Kleberaupe erfolgen, so dass sich klebstofffreie Bereiche ergeben, die zugleich eine Dämm-Luftschicht darstellen.

Weiter bevorzugt sind die genannten Verstärkungslagen über den Klebstoff unmittelbar miteinander verbunden. Darüber hinaus bevorzugt sind auch nur zwei Verstärkungslagen insgesamt in dem Möbelteil vorgesehen.

Hinsichtlich des Klebstoffes, der die Außenlagen vermittels der Verstärkungslagen verbindet, ist bevorzugt, dass der Klebstoff Polyurethan-basiert ist. Es kann sich um einen Ein- oder Zweikomponentenklebstoff handeln. Weiter bevorzugt handelt es sich um einen aufschäumenden Klebstoff, insbesondere einen aufschäumenden Zweikomponentenklebstoff.

Die Stirnflächen eines solchen Möbelteils, das im Hinblick auf den angegebenen Einsatzzweck wie beispielsweise eine Schranktüre ersichtlich eine Länge von 1 m oder mehr, bis hin zu 2 oder 3 m beispielsweise, aufweisen kann, bei einer Breite von 10 cm bis hin zu 1 m oder gegebenenfalls auch mehr, können auf unterschiedliche Weise gebildet sein. Sie können zunächst durch die erste Außenfläche, d. h. den Keramik- oder Stein-Plattenkörper, gebildet sein. Sie können aber auch durch die zwei Außenfläche, d. h. das Kunststoff- oder Holz-Platten-teil, gebildet sein.

Im ersteren Fall ist es weiter bevorzugt, dass die im Querschnitt bezogen auf die an der ersten Außenfläche innenseitig anhaftende Verstärkungslage gehrungsschnittartig aneinanderliegenden Teile der Außenfläche und der Stirnseite miteinander insgesamt verklebt sind. Hinsichtlich der zweiten Möglichkeit kann auch nur, bei entsprechend zunächst längerer Ausbildung der zweiten Außenfläche bzw. des diesbezüglichen Plattenteils, eine Gehrungsaussparung in der zugeordneten Verstärkungslage ausgebildet sein und sodann ein Umknicken oder Umfalzen erfolgen, so dass die Stirnfläche durch einen durchgehenden Bereich der zweiten Außenlage gebildet ist. Weiter alternativ kann auch die durch die zweite Außenlage gebildete Stirnfläche insgesamt durch Ankleben, wie grundsätzlich bezüglich der Ausbildung der Stirnfläche durch die erste Außenlage beschrieben, vorgesehen sein.

Bei der Herstellung eines solchen Gegenstandes werden bevorzugt zunächst aus dem Stein- oder Keramikplattenteil eine Außenlage zur Bildung der ersten Oberseitenfläche gebildet, gegebenenfalls zugleich unter Ausbildung einer Stirnfläche. Dieses Stein- oder Keramikplattenteil wird sodann innenseitig, also gegenüberliegend zu der späteren Außenseite, mit einer Verstärkungslage verbunden. Es kann sich auch hier um eine Klebeverbindung handeln. Der Klebespalt wird sehr gering, durch Verpressen beispielsweise, eingestellt. Eine gleiche Vorgehensweise wird hinsichtlich der gegenüberliegenden Außenlage mit dem Kunststoff- oder Holzplattenteil vorgenommen. Sodann werden die so vorbereiteten Außenlagen, also jeweils kombinierte Lagen von einem Stein- oder Keramikplattenteil und einer Verstärkungslage bzw. einem Kunststoff- oder Holzplattenteil und einer Verstärkungslage vermittels der Verstärkungslagen miteinander verbunden, nämlich auch verklebt. Dies aber unter Einstellung eines relativ breiten Klebespaltes, wobei zugleich im Zuge der Verklebung eine Vorgabe der gewünschten Gesamtdicke des plattenartigen Möbelteils vorgenommen wird und der Klebespalt zwischen den Verstärkungslagen hiernach eingestellt. Bei selber Dicke von so hergestellten Plattenteilen kann also entsprechend die Breite des Klebespaltes zwischen den Verstärkungslagen im Endprodukt schwanken.

Nachstehend ist die Erfindung des Weiteren anhand der beigefügten Zeichnung, die jedoch lediglich Ausführungsbeispiele darstellt, erläutert. Hierbei zeigt:
- Fig. 1: eine schematische perspektivische Ansicht eines Schrankes mit mehreren Türen;
- Fig. 2: einen Querschnitt durch eine erste Ausführungsform einer Türe;
- Fig. 3: einen Querschnitt durch eine zweite Ausführungsform einer Türe; und
- Fig. 4: eine Darstellung der zweiten Außenlage mit verhafteter Verstärkungslage vor Ausbildung der Stirnfläche durch die zweite Außenlage.

Dargestellt und beschrieben ist im Hinblick auf eine beispielsweise Anwendung eines Möbelteils wie hier beschrieben ein Schrank 1, der eine Mehrzahl von Türen 2, 3 aufweist.

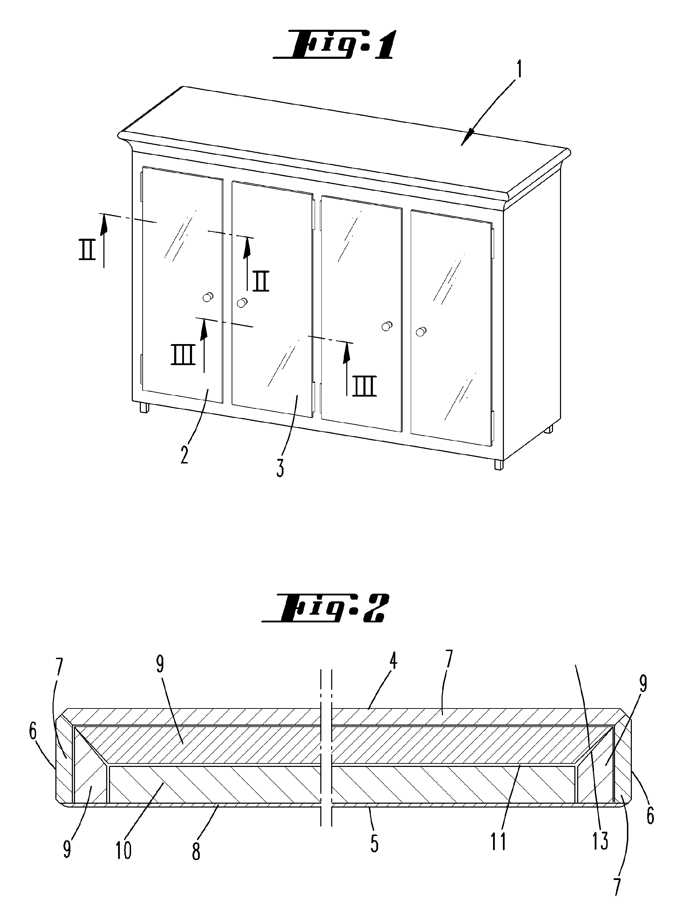

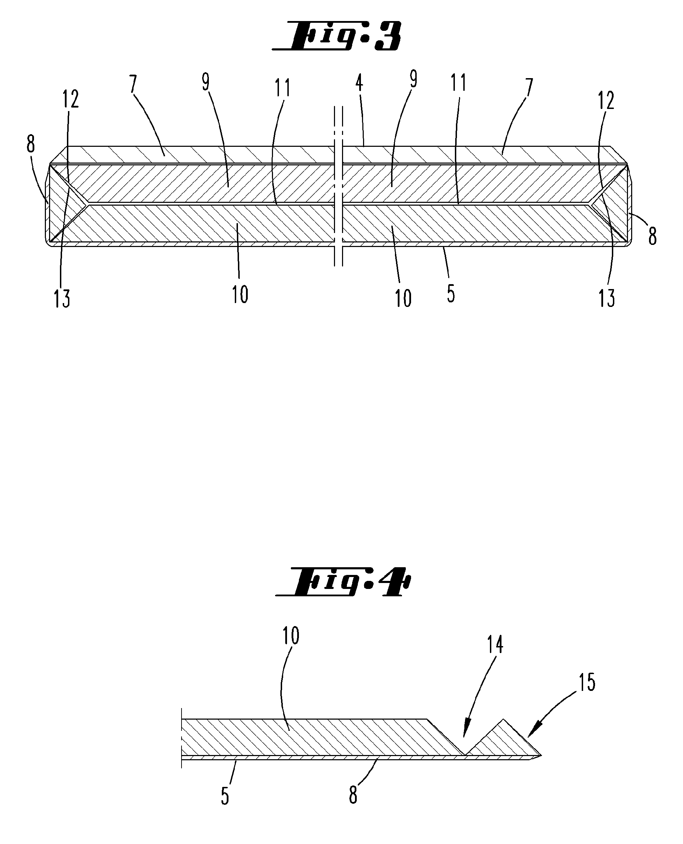

Insbesondere derartige Türen sind plattenartige Möbelteile wie sie hier Gegenstand sind. Ein solches plattenartiges Möbelteil, mit Bezug zu den Querschnittsdarstellungen der Figuren 2 und 3, weist eine erste Oberseitenfläche 4 und eine zweite Oberseitenfläche 5 auf. Darüber hinaus weist sie mehrere Stirnflächen 6 auf. Im Falle einer Schranktüre, wie hier im Einzelnen beschrieben, handelt es sich um vier Stirnflächen 6.

Die erste Oberseitenfläche 4 ist als Außenlage durch ein Stein- oder Keramik-Plattenteil 7 gebildet. Die zweite Oberseitenfläche 5 ist durch ein Kunststoff- oder Holz-Plattenteil 8 gebildet.

Diese Plattenteile können bevorzugt eine Dicke von 0,3 bis 10 mm aufweisen. Sie bilden jeweils in dem insgesamt gegebenen Schichtteil eine erste bzw. zweite Außenlage.

Beiden Außenlagen, also der Stein- oder Keramikplatte 7 und dem Kunststoffoder Holz-Plattenteil 5 ist jeweils eine Verstärkungslage 9 bzw. 10 zugeordnet. Die Verstärkungslagen sind mit den zugeordneten Innenflächen der Stein- oder Keramikplatte bzw. dem Kunststoff- oder Holz-Plattenteil 5 verhaftet. Bevorzugt verklebt. Es kann sich, insbesondere bei Kunststoff auch um eine Kaschierung handeln. Also eine entsprechende Erwärmung, die in dem jeweiligen Plattenteil bzw. der Verstärkungslage bereits enthaltene, bei Wärme aktivierte Klebeelemente nutzt.

Die Verstärkungslagen 9,10 bestehen aus einem Mineralstoff oder Kunststoff. Bei Kunststoff handelt es sich um einen Hartkunststoff. Beispielsweise um einen hoch verdichteten Schaumstoff.

Als Mineralstoff ist insbesondere Blähglas bevorzugt. Weiter ein Blähglas oder einen Mineralstoff allgemein mit einer Raumdichte von 300 bis 700, bevorzugt 500 kg/m³.

Die Plattenteile, d. h. das Stein- oder Keramik-Plattenteil 7 oder das Kunststoffoder Holz-Plattenteil 8 sind vermittels der Verstärkungslagen 9,10 unter Ausbildung bzw. Belassung eines Klebespaltes 11 miteinander verbunden.

Der Klebespalt hat eine gewisse Dicke, die bei einem Querschnitt durch ein solches Möbelteil auch ohne Weiteres mit bloßem Auge erkennbar ist. Die Klebespaltbreite kann 0,2 mm oder mehr bis hin zu beispielsweise 4 mm betragen.

Die beschriebene Ausgestaltung ist bevorzugt über praktisch die gesamte Fläche eines solchen Möbelteils gegeben. Jedoch mit Ausnahme der Stirnseiten. Wie aus den Darstellungen ersichtlich kann, siehe Figur 2, eine Stirnseite 6 zunächst durch ein Stein- oder Keramik-Plattenteil 7 - auch - gebildet sein. Sie kann aber auch, siehe Ausführungsform der Figur 3, durch das Kunststoff- oder Holz-Plattenteil 8 gebildet sein.

Im Falle der Ausbildung durch das Stein- oder Keramik-Plattenteil 7 ist dieses auch im Bereich der Stirnseite mit einer, grundsätzlich derselben, Verstärkungslage 9 verhaftet. Unter Ausbildung eines Gehrungsschnittes 12 bzw. 13 an den zugewandten Seiten der Verstärkungslage 9 bzw. des Stein- oder Keramik-Plattenteils 7 am Übergang von einer Außenseite zu einer Stirnseite 6.

Bei der Ausführungsform der Figur 3 kann vorgesehen sein, wie dies im Ausgangspunkt aus Figur 4 ersichtlich ist, dass die Stirnseite 6 durch das Kunststoffoder Holz-Plattenteil 8 durchgehend von der Unterseite gebildet ist. Hierzu ist im Ausgangspunkt, siehe Figur 4, nach Verhaftung der zugeordneten Verstärkungslage 10 in dieser ein im Querschnitt beispielsweise dreieckförmiger Gehrungsschnitt 14 ausgebildet, so dass das randseitig verbleibende Teil hochgeklappt werden kann in die Stellung gemäß Figur 3.

Weiter bevorzugt ist hierbei das Kunststoff- oder Holz-Plattenteil 8 noch mit einem Überstand 15 ausgebildet, der zur günstigen Anlage, in eingezogener Form, an der zugeordneten Randkante 16 des Stein- oder Keramikplattenteils 7 genutzt sein kann, wie sich dies im Einzelnen aus Figur 3 ergibt. Dort kann eine Verklebung vorgesehen sein.

Die vorstehenden Ausführungen dienen der Erläuterung der von der Anmeldung insgesamt erfassten Erfindungen, die den Stand der Technik durch die folgenden Merkmalskombinationen jeweils eigenständig weiterbilden, nämlich:

Ein plattenartiges Möbelteil mit zwei Oberseiten-Flächen 4, 5 und Stirnflächen 6, wobei zur Bildung einer ersten Oberseiten-Fläche 4 ein Stein- oder Keramik-Plattenteil 7, mit einer Dicke von 1 bis 10 mm, als erste Außenlage und zur Bildung einer zweiten Oberseiten-Fläche 5 ein Kunststoff- oder Holz-Plattenteil 8, mit einer Dicke von 0,3 bis 10 mm, als zweite Außenlage vorgesehen sind, und wobei weiter zwischen den Außenlagen eine Verstärkungslage 9,10 angeordnet ist, wobei darüber hinaus das Möbelteil eine senkrecht zu einer Flächenerstreckung eines Plattenteils 7, 8 gemessene Gesamtdicke von 10 bis 40 mm aufweist, das dadurch gekennzeichnet ist, dass zwei Verstärkungslagen 9,10 vorgesehen sind, dass die Verstärkungslagen 9,10 als Festkörper vorzugsweise aus einem Mineralstoff oder Kunststoff ausgebildet sind, dass beide Plattenteile 7, 8 jeweils flächig innenseitig mit einer Verstärkungslage 9,10 verhaftet sind und dass die Plattenteile 7, 8 mittels der Verstärkungslagen 9,10 untereinander unter Ausbildung eines eine Klebespaltbreite aufweisenden Klebespaltes 11 durch Klebung verbunden sind, wobei die in Dickenrichtung des Möbelteils gemessene Klebespaltbreite 0,2 mm oder mehr bis hin zu beispielsweise 4 mm beträgt.

Ein Verfahren zum Herstellen eines plattenartigen Möbelteils mit zwei Oberseitenflächen 4, 5 und Stirnflächen 6, wobei zur Bildung einer ersten Oberseitenfläche 4 ein Stein- oder Keramik-Plattenteil 7, mit einer Dicke von 1 bis 10 mm, als erste Außenlage und zur Bildung einer zweiten Oberseiten-Fläche 5 ein Kunststoff- oder Holz-Plattenteil 8, mit einer Dicke von 0,3 bis 10 mm, als zweite Außenlage vorgesehen werden, wobei weiter zwischen den Außenlagen eine Verstärkungslage 9,10 angeordnet wird, das dadurch gekennzeichnet ist, dass jedes Plattenteil 7, 8 einseitig mit einer gesonderten Verstärkungslage 9,10 verbunden wird und dass die mit den Verstärkungslagen 9,10 verbundenen Plattenteile 7, 8 unter Zwischenlage der Verstärkungslagen 9,10 und Ausbildung eines Klebespaltes 11 miteinander verklebt werden, wobei der Klebespalt 11 zum Ausgleich von Toleranzen bei Einstellung einer gleichen Gesamtdicke genutzt wird, wobei die Verstärkungslagen 9,10 als handhabbarer Festkörper aus einem Mineralstoff oder Kunststoff ausgebildet sind.

Ein plattenartiges Möbelteil oder Verfahren zur Herstellung eines Möbelteils, die dadurch gekennzeichnet sind, dass eine Verstärkungslage 9,10 ein Raumgewicht von 300 bis 700, bevorzugt 500 kg/m³ aufweist.

Ein plattenartiges Möbelteil oder Verfahren zur Herstellung eines Möbelteils, die dadurch gekennzeichnet sind, dass eine Verstärkungslage 9,10 aus Blähglas besteht.

Ein plattenartiges Möbelteil oder Verfahren zur Herstellung eines Möbelteils, die dadurch gekennzeichnet sind, dass nur zwei Verstärkungslagen 9,10 vorgesehen sind.

Ein plattenartiges Möbelteil oder Verfahren zur Herstellung eines Möbelteils, die dadurch gekennzeichnet sind, dass eine Stirnfläche 6 durch das Kunststoffoder Holz-Plattenteil 8 gebildet ist.

Ein plattenartiges Möbelteil oder Verfahren zur Herstellung eines Möbelteils, die dadurch gekennzeichnet sind, dass eine Stirnfläche 6 durch die zweite Außenlage gebildet ist.

### Bezugszeichenliste

- 1: Schrank
- 2: Tür
- 3: Tür
- 4: Oberseitenfläche
- 5: Oberseitenfläche
- 6: Stirnfläche
- 7: Stein- oder Keramik-Plattenteil
- 8: Kunststoff- oder Holz-Plattenteil
- 9: Verstärkungslage
- 10: Verstärkungslage
- 11: Klebespalt
- 12: Gehrungsschnitt
- 13: Gehrungsschnitt
- 14: Gehrungsschnitt
- 15: Überstand
- 16: Randkante

## Patentansprüche

1. Plattenartiges Möbelteil mit zwei Oberseiten-Flächen (4, 5) und Stirnflächen (6), wobei zur Bildung einer ersten Oberseiten-Fläche (4) ein Steinoder Keramik-Plattenteil (7), mit einer Dicke von 1 bis 10 mm, als erste Außenlage und zur Bildung einer zweiten Oberseiten-Fläche (5) ein Kunststoff- oder Holz-Plattenteil (8), mit einer Dicke von 0,3 bis 10 mm, als zweite Außenlage vorgesehen sind, und wobei weiter zwischen den Außenlagen eine Verstärkungslage (9,10) angeordnet ist, wobei darüber hinaus das Möbelteil eine senkrecht zu einer Flächenerstreckung eines Plattenteils (7, 8) gemessene Gesamtdicke von 10 bis 40 mm aufweist, **dadurch gekennzeichnet, dass** zwei Verstärkungslagen (9,10) vorgesehen sind, dass die Verstärkungslagen (9,10) als Festkörper vorzugsweise aus einem Mineralstoff oder Kunststoff ausgebildet sind, dass beide Plattenteile (7, 8) jeweils flächig innenseitig mit einer Verstärkungslage (9,10) verhaftet sind und dass die Plattenteile (7, 8) mittels der Verstärkungslagen (9,10) untereinander unter Ausbildung eines eine Klebespaltbreite aufweisenden Klebespaltes (11) durch Klebung verbunden sind, wobei die in Dickenrichtung des Möbelteils gemessene Klebespaltbreite 0,2 mm oder mehr bis hin zu beispielsweise 4 mm beträgt.

2. Verfahren zum Herstellen eines plattenartigen Möbelteils mit zwei Oberseitenflächen (4, 5) und Stirnflächen (6), wobei zur Bildung einer ersten Oberseitenfläche (4) ein Stein- oder Keramik-Plattenteil (7), mit einer Dicke von 1 bis 10 mm, als erste Außenlage und zur Bildung einer zweiten Oberseiten-Fläche (5) ein Kunststoff- oder Holz-Plattenteil (8), mit einer Dicke von 0,3 bis 10 mm, als zweite Außenlage vorgesehen werden, wobei weiter zwischen den Außenlagen eine Verstärkungslage (9,10) angeordnet wird, **dadurch gekennzeichnet, dass** jedes Plattenteil (7, 8) einseitig mit einer gesonderten Verstärkungslage (9,10) verbunden wird und dass die mit den Verstärkungslagen (9,10) verbundenen Plattenteile (7, 8) unter Zwischenlage der Verstärkungslagen (9,10) und Ausbildung eines Klebespaltes (11) miteinander verklebt werden, wobei der Klebespalt (11) zum Ausgleich von Toleranzen bei Einstellung einer gleichen Gesamtdicke genutzt wird, wobei die Verstärkungslagen (9,10) als handhabbarer Festkörper aus einem Mineralstoff oder Kunststoff ausgebildet sind.

3. Plattenartiges Möbelteil oder Verfahren zur Herstellung eines Möbelteils nach Anspruch 1 oder 2, **dadurch gekennzeichnet, dass** eine Verstärkungslage (9,10) ein Raumgewicht von 300 bis 700, bevorzugt 500 kg/m³ aufweist.

4. Plattenartiges Möbelteil oder Verfahren zur Herstellung eines Möbelteils nach einem der vorherigen Ansprüche, **dadurch gekennzeichnet, dass** eine Verstärkungslage (9,10) aus Blähglas besteht.

5. Plattenartiges Möbelteil oder Verfahren zur Herstellung eines Möbelteils nach einem der vorherigen Ansprüche, **dadurch gekennzeichnet, dass** nur zwei Verstärkungslagen (9,10) vorgesehen sind.

6. Plattenartiges Möbelteil oder Verfahren zur Herstellung eines Möbelteils nach einem der vorherigen Ansprüche, **dadurch gekennzeichnet, dass** eine Stirnfläche (6) durch das Kunststoff- oder Holz-Plattenteil (8) gebildet ist.

7. Plattenartiges Möbelteil oder Verfahren zur Herstellung eines Möbelteils nach einem Ansprüche, **dadurch gekennzeichnet, dass** eine Stirnfläche (6) durch die erste Außenlage gebildet ist.

8. Plattenartiges Möbelteil oder Verfahren zur Herstellung eines Möbelteils nach einem der Ansprüche 1 bis 6, **dadurch gekennzeichnet, dass** eine Stirnfläche (6) durch die zweite Außenlage gebildet ist.
